# FASCICULE DE BREVET EUROPEEN

(11) **EP 2 913 909 B1**
(45) Date de publication et mention de la délivrance du brevet: **08.11.2017**
(21) Numéro de dépôt: 15156082.8
(22) Date de dépôt: 23.02.2015
(51) Int. Cl.: H02K 5/10, H02K 3/52, H02K 11/33

(54) **Dispositif de connexion d'une machine électrique tournante et utilisation d'un tel dispositif de connexion dans un compresseur de suralimentation électrique**
Verbindungsvorrichtung einer elektrisch umlaufenden Maschine, und Einsatz einer solchen Verbindungsvorrichtung in einem elektrischen Aufladekompressor
Connection device for a rotary electric machine and use of such a connection device in an electric supercharger

(30) Priorité: 25.02.2014 FR 1451494
(43) Date de publication de la demande: 02.09.2015
(73) Titulaire: VALEO EQUIPEMENTS ELECTRIQUES MOTEUR, 94046 Créteil Cedex (FR)
(72) Inventeur: Guerin, Fabien, 92320 CHATILLON (FR); Baudesson, Philippe, 27220 LA BOISSIERE (FR); Lebrasseur, Patrick, 60240 MONTAGNY-EN-VEXIN (FR); Bencheikh, Amine, 75015 PARIS (FR); Rouet, Amaury, 75015 PARIS (FR)
(74) Mandataire: Tran, Chi-Hai

(56) Documents cités:
- EP-A1- 2 043 234
- EP-A1- 2 214 293
- EP-A1- 2 244 358
- EP-A1- 2 549 627
- EP-A2- 1 677 404
- EP-A2- 2 352 220
- WO-A1-02/087057
- DE-A1-102008 000 124
- FR-A1- 2 831 346
- US-A1- 2004 070 293
- US-A1- 2009 021 091

## Description

### DOMAINE TECHNIQUE DE L'INVENTION.

La présente invention concerne un dispositif de connexion d'une machine électrique tournante pour des applications dans le domaine de l'automobile, notamment pour un moteur électrique d'un compresseur de suralimentation électrique.

L'invention concerne également un compresseur de suralimentation électrique comprenant ce dispositif de connexion.

### ARRIERE PLAN TECHNOLOGIQUE DE L'INVENTION.

Des considérations écologiques, et notamment la lutte contre le réchauffement climatique en réduisant les émissions de CO₂, ont amené les équipementiers à proposer aux constructeurs d'automobiles des compresseurs de suralimentation électriques qui améliorent la réponse dynamique des moteurs à combustion interne de faible cylindrée à bas régime.

A la différence des compresseurs de suralimentation classiques entraînés par les gaz d'échappement, le compresseur de suralimentation électrique, c'est-à-dire entraîné par un moteur électrique, présente un temps de réponse instantané, et améliore le couple moteur à bas régime et l'accélération.

Ce système permet de réduire considérablement la cylindrée des moteurs thermiques, et par conséquent de réduire la consommation de carburant.

Dans le cas d'un moteur diesel, le temps de latence d'un compresseur de suralimentation à gaz est aussi responsable de l'émission de particules quand, dans une phase d'accélération à bas régime, le système d'injection essaie de fournir la puissance demandée en injectant un surplus de carburant.

Pour pallier cet inconvénient, la société VALEO SYSTEMES DE CONTRÔLE MOTEUR propose dans sa demande de brevet internationale WO 2013/045821 la mise en oeuvre d'un compresseur de suralimentation électrique pour assister le turbocompresseur à gaz au moment de l'enfoncement de la pédale d'accélérateur.

Toutefois, dans certains modes de réalisation d'un tel système, il peut être difficile de connecter à l'alimentation électrique les entrées de phases du moteur électrique, du fait que celles-ci sont le plus souvent proches de l'axe et aussi de contraintes d'étanchéité entre la partie turbine et la partie électrique, comme l'indique la demande de brevet internationale WO2005/024202.

Le document EP 2 244 358 A1 divulgue un dispositif de connexion pour machine électrique tournante. Dans le cadre du développement de son compresseur de suralimentation électrique, l'entité inventive a été confrontée à un problème de ce genre pour connecter les entrées de phases à une carte électronique de puissance de dimension très supérieure au diamètre du moteur électrique.

### DESCRIPTION GENERALE DE L'INVENTION.

Le but de la présente invention est donc d'apporter une solution à ce problème.

Elle a précisément pour objet un dispositif de connexion d'une machine électrique tournante du type de celles alimentées par l'intermédiaire d'une pluralité de premières fiches disposées sur un palier d'un axe de cette machine à des intervalles angulaires prédéterminés autour de cet axe, et à une première distance prédéterminée.

Ce dispositif de connexion est remarquable en ce qu'il comprend une pluralité de secondes fiches agencées aussi autour de cet axe à une seconde distance prédéterminée supérieure à la première distance prédéterminée et reliées électriquement à une pluralité de premières bornes aptes à être connectées avec les premières fiches.

Le dispositif de connexion comporte avantageusement une pièce principale constituée de matière plastique avec une pluralité de barres métalliques surmoulées reliant les secondes fiches et les premières bornes.

De préférence, ce dispositif de connexion comporte en outre des premiers moyens d'étanchéité aptes à coopérer avec le palier de la machine électrique et des seconds moyens d'étanchéité coopérant avec un capot.

Ces premiers moyens d'étanchéité comprennent avantageusement une première couronne coopérant avec une première gorge circonférentielle de la pièce principale. Les seconds moyens d'étanchéité sont constitués aussi avantageusement d'une seconde couronne coopérant avec une deuxième gorge circonférentielle de la pièce principale et une surface d'appui circonférentielle du capot.

De préférence, les secondes fiches sont réparties deux par deux autour de l'axe de la machine électrique tournante.

Selon un mode de réalisation, les secondes fiches sont réparties régulièrement autour de l'axe de la machine.

Selon un mode de réalisation, les barres métalliques s'étendent sensiblement radialement à partir de premières bornes respectives.

Selon un mode de réalisation, le capot est destiné à recouvrir de manière étanche une zone centrale du dispositif autour de l'axe, ladite zone comprenant les premières bornes. Notamment, le capot est destiné à recouvrir de manière étanche ladite zone grâce aux seconds moyens d'étanchéité. En particulier, ladite zone s'étend depuis l'axe de la machine jusqu'à une distance comprise entre la première distance et la seconde distance.

Selon un mode de réalisation, lesdits premiers moyens d'étanchéité comprennent une première couronne coopérant avec une première gorge circonférentielle de ladite pièce principale et lesdits seconds moyens d'étanchéité comprennent une seconde couronne coopérant avec une deuxième gorge circonférentielle de ladite pièce principale et une surface d'appui circonférentielle dudit capot. Notamment, la première couronne coopère avec une première gorge circonférentielle de ladite pièce principale et avec ledit palier, notamment une rainure dudit palier.

L'invention concerne aussi une machine électrique tournante du type de celles alimentées par l'intermédiaire d'une pluralité de premières fiches disposées sur un palier d'un axe de cette machine à des intervalles angulaires prédéterminés autour de cet axe à une première distance prédéterminée.

Cette machine électrique tournante est remarquable en ce qu'elle comprend un dispositif de connexion présentant les caractéristiques décrites ci-dessus, une pluralité de premières bornes du dispositif de connexion étant soudées avec les premières fiches.

De préférence, cette machine électrique tournante comporte au moins un capteur de position agencé sur le dispositif de connexion.

La machine électrique tournante selon l'invention comporte fort avantageusement une carte électronique de puissance comprenant une pluralité de secondes bornes agencées autour de l'axe à ladite seconde distance prédéterminée supérieure à la première distance prédéterminée et reliées électriquement aux premières fiches par l'intermédiaire du dispositif de connexion.

Selon un mode de réalisation, le capteur de position est agencé au moins en partie dans un logement dans le capot du dispositif de connexion. En particulier, le capteur de position est agencé de sorte à s'étendre à proximité d'une tige de rotation de la machine électrique, la tige de rotation s'étendant suivant l'axe de la machine. Notamment, au moins une partie du capteur s'étend en vis-à-vis de la tige de rotation de manière à détecter une position angulaire de la machine électrique grâce par exemple à un effet magnétique.

Selon un mode de réalisation, les secondes bornes sont situées en périphérie de la carte électronique de puissance. Notamment, la carte électronique de puissance est au dessus du dispositif de connexion, en particulier au dessus de la zone centrale du dispositif de connexion.

L'invention vise également un compresseur de suralimentation de véhicule automobile destiné à un système de suralimentation d'un moteur thermique remarquable en ce qu'il est entraîné par la machine électrique tournante spécifiée ci-dessus.

Ces quelques spécifications essentielles auront rendu évidents pour l'homme de métier les avantages apportés par le dispositif de connexion selon l'invention, ainsi que par la machine électrique tournante et le compresseur de suralimentation électrique qui l'utilisent, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est une vue de dessus d'une partie électrique d'un compresseur de suralimentation électrique connu de l'état de la technique montrant une carte électronique de puissance d'un type visé par l'invention.
Les **Figures 2a et 2b** sont respectivement une vue en perspective de la pièce principale du dispositif de connexion selon l'invention et une vue en perspective de celui-ci.
Les **Figures 3a et 3b** sont respectivement une vue éclatée du dispositif de connexion selon l'invention et une demi coupe radiale de celui-ci.
La **Figure 4** est une vue éclatée partielle d'une machine électrique tournante selon l'invention.
La **Figure 5** est une vue de dessus d'une partie électrique d'un compresseur de suralimentation électrique selon l'invention montrant la carte électronique de puissance.
La **Figure 6** est une vue éclatée d'un compresseur de suralimentation électrique selon l'invention.

### DESCRIPTION DU MODE DE RÉALISATION PREFERE DE L'INVENTION.

Dans le cadre du développement d'un compresseur de suralimentation électrique, l'entité inventive a dû assurer une liaison électrique entre les entrées de phases 1 de la machine électrique 2 et des pièces de connexion 3 d'une carte électronique de puissance 4.

Or, un stator d'un exemple de réalisation particulier de cette machine 2 fait un premier diamètre de sensiblement 40 mm et la carte électronique de puissance 4 fait un second diamètre de sensiblement 110 mm.

Il en résulte que des premières fiches 1, correspondant à ces entrées de phases, qui sont disposées sur un palier de la machine 2 à des intervalles angulaires prédéterminés autour de l'axe, sont à une première distance prédéterminée D1 de l'axe égale au plus à 20 mm.

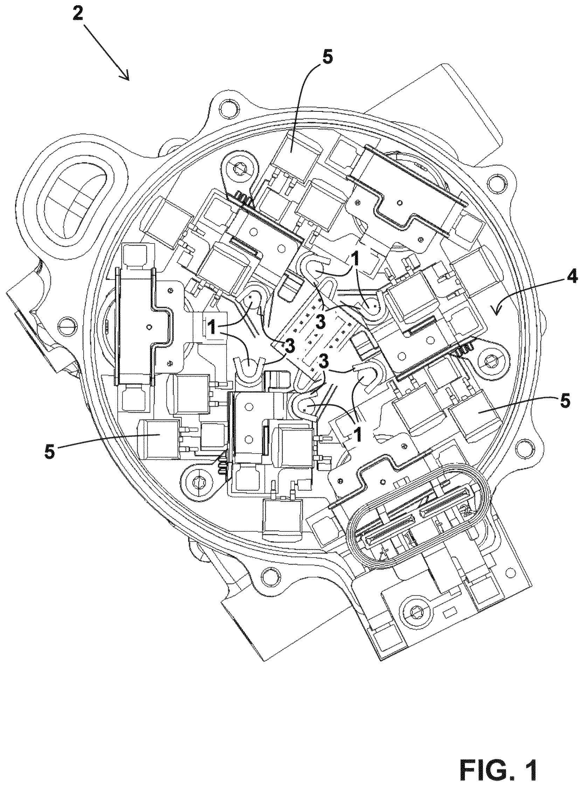

Comme le montre bien la **Figure 1****,** ces premières fiches 1 sortent alors dans les pièces de connexion 3 au milieu de la carte électronique de puissance 4.

La présence de ces pièces de connexion 3 à cet endroit limite les possibilités de placement des composants électroniques 5 et de leur routage, conduisant à une impossibilité.

Par ailleurs, les composants électroniques 5 ne sont pas protégés vis-à-vis de la partie turbine du compresseur de suralimentation, car il n'y a pas d'étanchéité entre la partie turbine et la partie électrique 2.

L'invention se caractérise par un dispositif de connexion 6 comportant une pièce principale 7 en plastique avec des barres métalliques 8 surmoulées placé entre la carte électronique de puissance 4 et un palier de machine électrique 2 sur lequel est montée cette carte 4. Sa fonction est:
- assurer l'étanchéité entre la carte électronique de puissance 4 et le palier;
- assurer les liaisons électriques entre la carte électronique 4 et les entrées de phases 1;
- libérer l'espace de routage de la carte de puissance 4 en ramenant les pièces de connexion 3 de liaison aux phases 1 à la périphérie de la carte 4;
- garantir un processus d'assemblage propre (composants électroniques 5 protégés des particules générées par les soudures des premières fiches 1 sur la carte électronique de puissance 4);
- assurer le positionnement et l'étanchéité d'un capteur de position.

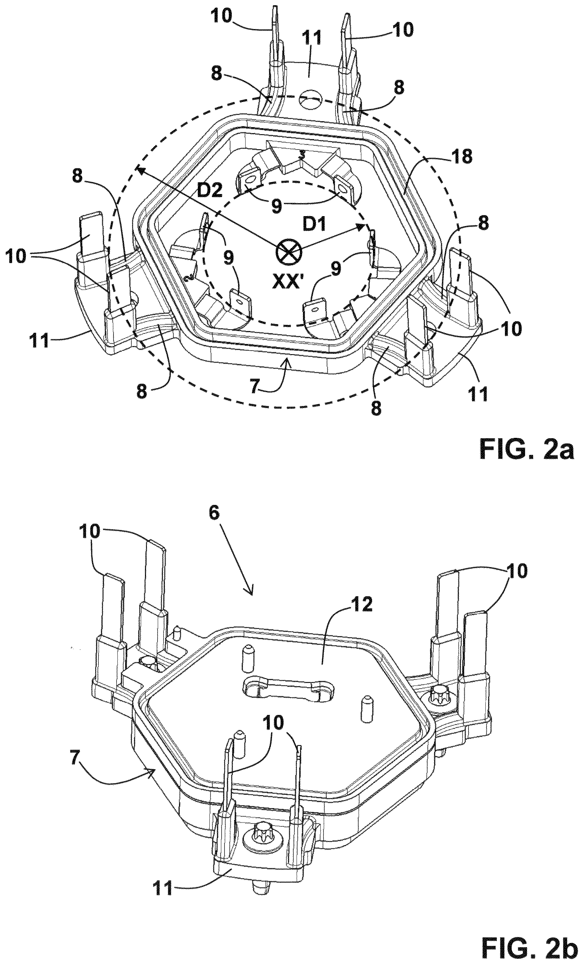

Comme le montre bien la **Figure 2a****,** la pièce principale 7 du dispositif de connexion 6 selon l'invention comprend une pluralité de premières bornes 9 reliées par les barres métalliques 8 à une pluralité de secondes fiches 10.

Les premières bornes 9 sont agencées sensiblement à la première distance prédéterminée D1 de l'axe XX' de manière à pouvoir être soudées avec les premières fiches 1 des entrées de phases.

Les secondes fiches 10, destinées à être soudées sur la carte électronique de puissance 4, sont agencées autour de l'axe XX' à une seconde distance prédéterminée D2, supérieure à la première distance prédéterminée D1, dans la limite des 55 mm correspondant au second diamètre de la carte électronique de puissance 4 dans cet exemple particulier de réalisation.

Dans cette forme de réalisation particulière, la pièce principale 7 a sensiblement la forme d'un hexagone. Une forme circulaire, ou autres, peut également être choisie dans d'autres formes de réalisation de l'invention.

Les secondes fiches 10, qui s'étendent parallèlement à l'axe XX' de la machine 2 dans des plans radiaux, sont groupées deux par deux et réparties sur trois supports 11 portés par trois côtés de l'hexagone et s'étendant dans le plan de celui-ci.

La **Figure 2b** montre le dispositif de connexion 6 selon l'invention complet.

Afin d'isoler la carte électronique de puissance 4 du palier de la machine électrique 2, la pièce principale 7 est munie d'un capot 12.

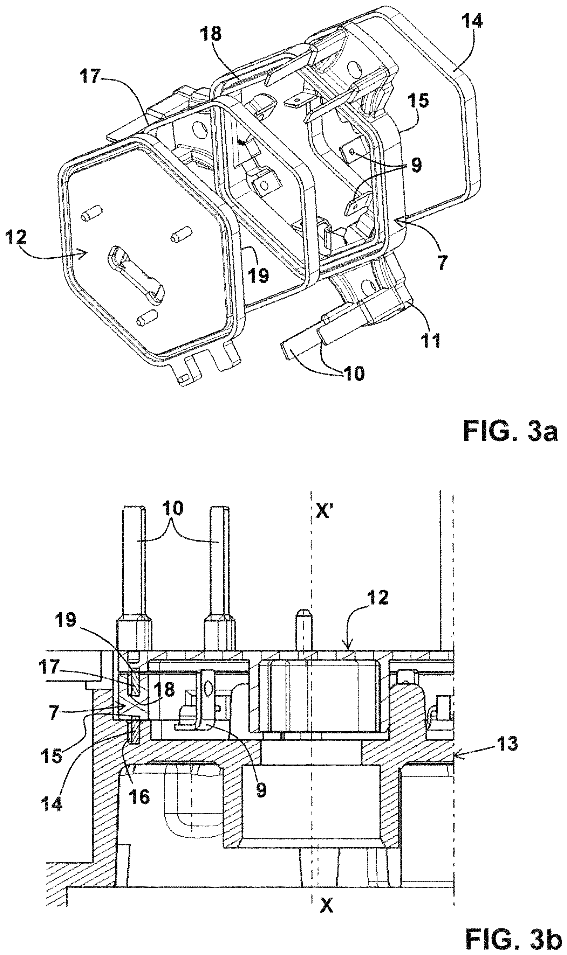

La vue éclatée de la **Figure 3a** et la coupe radiale de la **Figure 3b** montrent comment l'étanchéité entre la pièce principale 7 et le palier 13 est obtenue au moyen d'une première couronne 14 hexagonale de section rectangulaire coopérant avec une première gorge circonférentielle 15 de la pièce principale 7, d'une part, et avec une rainure 16 du palier 13, d'autre part.

De la même façon, l'étanchéité entre la pièce principale 7 et le capot 12 est obtenue au moyen d'une seconde couronne 17 hexagonale analogue à la première coopérant avec une seconde gorge circonférentielle 18 de la pièce principale 7, d'une part, et avec une surface d'appui circonférentielle 19 du capot 12, d'autre part.

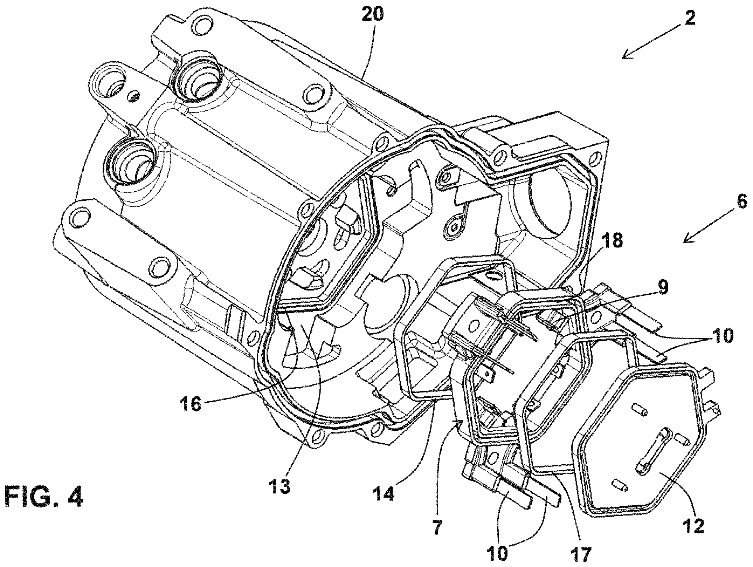

La vue éclatée partielle de la **Figure 4** montre l'agencement du dispositif de connexion 6 selon l'invention à l'intérieur d'un carter 20 de la machine électrique 2.

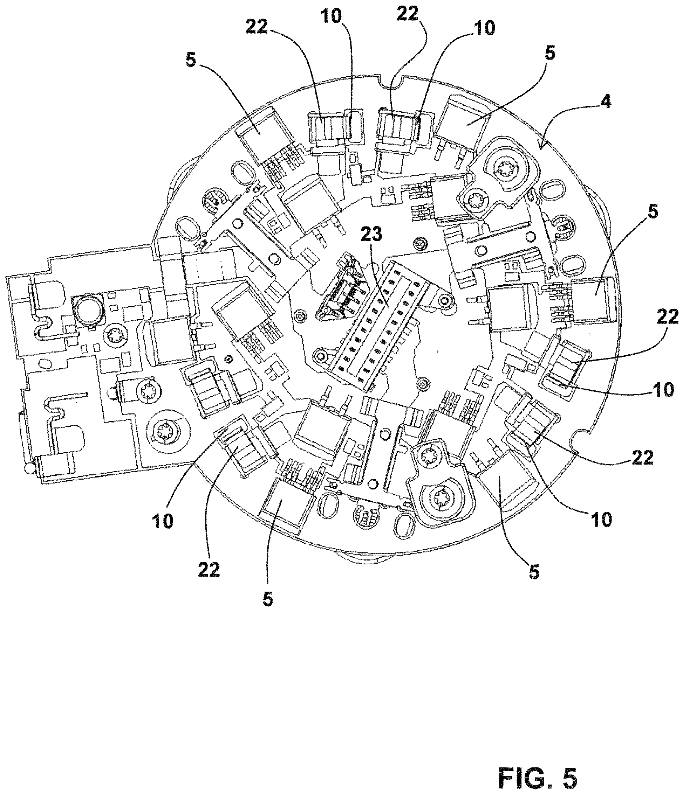

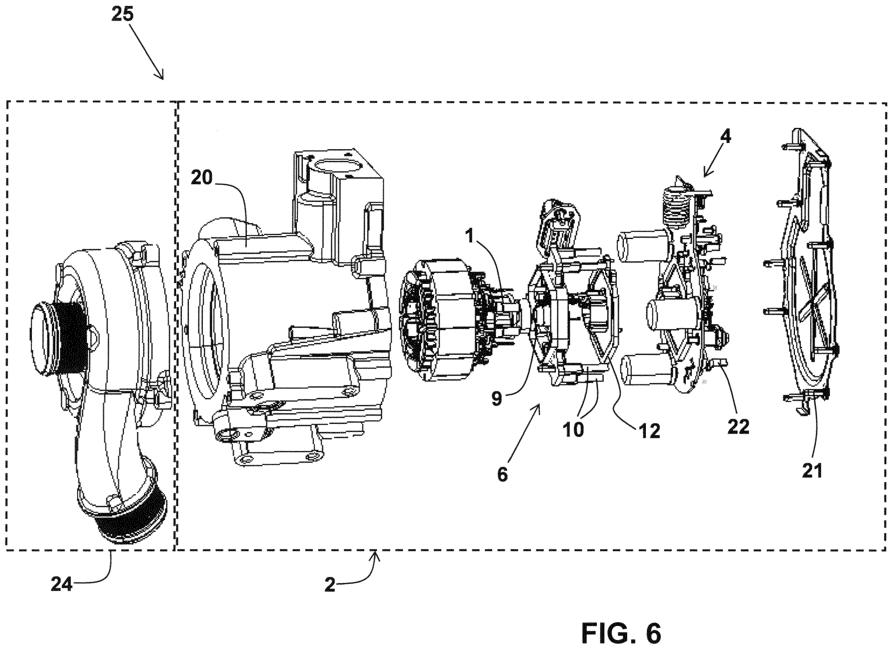

La carte électronique de puissance 4, montrée sur la **Figure 5****,** est également montée à l'intérieur du carter 20 sur le capot 12 du dispositif de connexion 6 comme le montre la vue éclatée du compresseur de suralimentation électrique selon l'invention de la **Figure 6****.**

Le carter 20 est fermé par un couvercle 21.

Le principe de l'invention repose sur l'utilisation d'une barre métallique 8 permettant une première soudure avec chaque phase 1 de la machine 2, puis dans un deuxième temps une seconde soudure pour se connecter avec chacune des secondes bornes 22 de chaque phase 1 de la carte électronique de puissance 4.

Ce processus en deux étapes permet:
- dans un premier temps, la pose dans la machine 2 de la pièce principale 7 en plastique surmoulée avec une première étanchéité 14, 15, 16 sur la périphérie et une accessibilité des phases moteur 1 pour une première soudure;
- dans un deuxième temps, l'obstruction par le capot 12, ou de la résine, de la partie accessible pour la première soudure afin d'assurer un deuxième niveau d'étanchéité 17, 18, 19;
- la soudure déportée dans une zone pouvant être gardée propre des secondes fiches 10 de la pièce principale 7 avec les secondes bornes 22 de la carte électronique de puissance 4.

Les secondes bornes 22 sont des composants montés en surface (CMS), qui occupent une place réduite sur le substrat métallisé isolé (SMI) de la carte électronique de puissance 4.

L'espace libéré au centre de la carte 4 par les composants électroniques 5, notamment les semi-conducteurs de puissance de type MOSFET, comporte un interconnecteur de signal 23.

La machine électrique tournante 2 réalisée de la sorte est accouplée à la partie turbine 24 pour constituer un compresseur de suralimentation électrique 25 compact dont la carte électronique de puissance 4 intégrée est d'un montage facile et à l'abri des particules polluantes.

Comme il va de soi, l'invention ne se limite pas au seul mode de réalisation préférentiel décrit ci-dessus, notamment le nombre de phases de la machine électrique tournante 2 indiqué n'est qu'un exemple.

La forme globalement prismatique à base hexagonale du dispositif de connexion 6 selon l'invention n'est aussi qu'un exemple d'un mode préféré de réalisation.

En variante, la pièce principale 7 est de forme circulaire, les barres métalliques 8 surmoulées dans des bras s'étendant radialement étant connectées à des secondes fiches 22 s'étendant parallèlement à l'axe XX' dans des plans tangentiels.

En variante encore, les première et seconde couronnes 14, 17 sont remplacées avantageusement par des joints toriques, la première gorge circonférentielle 15 de la pièce principale 7 et la surface d'appui circonférentielle 19 du capot 12 étant supprimées.

Dans un mode de réalisation, un capteur de position est agencé au moins en partie dans un logement dans le capot 12. Ce logement est notamment visible en figure 2b. Le capteur de position peut-être surmoulé par la matière du capot 12.

D'autres modes de réalisation que celui décrit en détail ci-dessus ne sortiraient donc pas du cadre de la présente invention dans la mesure où ils résultent des revendications ci-après.

## Revendications

1. Dispositif de connexion (6) d'une machine électrique tournante (2) du type de celles alimentées par l'intermédiaire d'une pluralité de premières fiches (1) disposées sur un palier (13) d'un axe (XX') de ladite machine (2) à des intervalles angulaires prédéterminés autour dudit axe (XX') à une première distance (D1) de l'axe (XX') prédéterminée, **caractérisé en ce qu'**il comprend :
- une pluralité de secondes fiches (10) agencées autour dudit axe (XX') à une seconde distance (D2) de l'axe (XX') prédéterminée supérieure à ladite première distance (D1) prédéterminée et reliées électriquement à une pluralité de premières bornes (9) aptes à être connectées avec lesdites premières fiches (1),
- une pièce principale (7) constituée de matière plastique avec une pluralité de barres métalliques (8) surmoulées reliant lesdites secondes fiches (10) et lesdites premières bornes (9),
les barres métalliques (8) s'étendant sensiblement radialement à partir de premières bornes (9) respectives.

2. Dispositif de connexion (6) d'une machine électrique tournante (2) selon la revendication 1, **caractérisé en ce qu'**il comporte en outre des premiers moyens d'étanchéité (14, 15, 16) aptes à coopérer avec ledit palier (13) et des seconds moyens d'étanchéité (17, 18, 19) coopérant avec un capot (12).

3. Dispositif de connexion (6) d'une machine électrique tournante (2) selon la revendication précédente, **caractérisé en ce que** le capot (12) est destiné à recouvrir de manière étanche une zone centrale du dispositif (6) autour de l'axe (XX'), ladite zone comprenant les premières bornes (9).

4. Dispositif de connexion (6) d'une machine électrique tournante (2) selon la revendication 2 ou 3, **caractérisé en ce que** lesdits premiers moyens d'étanchéité (14, 15, 16) comprennent une première couronne (14) coopérant avec une première gorge circonférentielle (15) de ladite pièce principale (7) et **en ce que** lesdits seconds moyens d'étanchéité (17, 18, 19) comprennent une seconde couronne (17) coopérant avec une deuxième gorge circonférentielle (18) de ladite pièce principale (7) et une surface d'appui circonférentielle (19) dudit capot (12).

5. Dispositif de connexion (6) d'une machine électrique tournante (2) selon l'une des revendications précédentes, **caractérisé en ce que** lesdites secondes fiches (10) sont réparties deux par deux autour dudit axe (XX').

6. Machine électrique tournante (2) du type de celles alimentées par l'intermédiaire d'une pluralité de premières fiches (1) disposées sur un palier (13) d'un axe (XX') de ladite machine (2) à des intervalles angulaires prédéterminés autour dudit axe (XX') à une première distance (D1) prédéterminée, **caractérisée en ce qu'**elle comprend un dispositif de connexion (6) selon l'une quelconque des revendications 1 à 5 précédentes, une pluralité de premières bornes (9) dudit dispositif de connexion (6) étant soudées avec lesdites premières fiches (1).

7. Machine électrique tournante (2) selon la revendication précédente, **caractérisée en ce qu'**elle comporte au moins un capteur de position agencé sur ledit dispositif de connexion (6).

8. Machine électrique tournante (2) selon la revendication précédente, **caractérisée en ce que** le dispositif de connexion (6) est selon l'une des revendications 2 à 4 et **en ce que** le capteur de position est agencé au moins en partie dans un logement dans le capot 12.

9. Machine électrique tournante (2) selon l'une quelconque des revendications 6 à 8 précédentes, **caractérisée en ce qu'**elle comporte une carte électronique de puissance (4) comprenant une pluralité de secondes bornes (22) agencées autour dudit axe (XX') à ladite seconde distance (D2) prédéterminée supérieure à ladite première distance (D1) prédéterminée et reliées électriquement auxdites premières fiches (1) par l'intermédiaire dudit dispositif de connexion (6).

10. Machine électrique tournante (2) selon la revendication 9, **caractérisée en ce que** les secondes bornes (22) sont situées en périphérie de la carte électronique (4).

11. Compresseur de suralimentation (25) de véhicule automobile destiné à un système de suralimentation d'un moteur thermique, **caractérisé en ce qu'**il est entraîné par une machine électrique tournante (2) selon l'une quelconque des revendications 6 à 10 précédentes.

## Patentansprüche

1. Verbindungsvorrichtung (3) für eine drehende elektrische Maschine (2) des Typs, der über mehrere erste Kontakte (1) versorgt wird, die auf einem Lager (13) einer Achse (XX') der Maschine (2) in vorgegebenen Winkelintervallen um die Achse (XX') in einem ersten vorgegebenen Abstand (D1) von der Achse (XX') angeordnet sind, **dadurch gekennzeichnet, dass** sie Folgendes umfasst:
- mehrere zweite Kontakte (10), die um die Achse (XX') in einem zweiten vorgegebenen Abstand (D2) von der Achse (XX'), der größer als der erste vorgegebene Abstand (D1) ist, angeordnet sind und mit mehreren ersten Anschlüssen (9), die mit den ersten Kontakten (1) verbunden werden können, elektrisch verbunden sind,
- ein Hauptteil (7), das aus Kunststoff gebildet ist und mehrere übergossene Metallstäbe (8) besitzt, die die zweiten Kontakte (10) und die ersten Anschlüsse (9) verbinden,
wobei sich die Metallstäbe (8) im Wesentlichen radial von den jeweiligen ersten Anschlüssen (9) erstrecken.

2. Verbindungsvorrichtung (6) einer drehenden elektrischen Maschine (2) nach Anspruch 1, **dadurch gekennzeichnet, dass** sie außerdem erste Dichtungsmittel (14, 15, 16), die mit dem Lager (13) zusammenwirken, und zweite Dichtungsmittel (17, 18, 19), die mit einer Haube (12) zusammenwirken, umfasst.

3. Verbindungsvorrichtung (6) einer drehenden elektrischen Maschine (2) nach dem vorhergehenden Anspruch, **dadurch gekennzeichnet, dass** die Haube (12) dazu bestimmt ist, eine Mittelzone der Vorrichtung (6) um die Achse (XX') dicht abzudecken, wobei die Zone die ersten Anschlüsse (9) enthält.

4. Verbindungsvorrichtung (6) einer drehenden elektrischen Maschine (2) nach Anspruch 2 oder 3, **dadurch gekennzeichnet, dass** die ersten Dichtungsmittel (14, 15, 16) einen ersten Kranz (14) aufweisen, der mit einer ersten Umfangskehle (15) des Hauptteils (7) zusammenwirkt, und dass die zweiten Dichtungsmittel (17, 18, 19) einen zweiten Kranz (17) aufweisen, der mit einer zweiten Umfangskehle (18) des Hauptteils (7) und mit einer Umfangsabstützoberfläche (19) der Haube (12) zusammenwirkt.

5. Verbindungsvorrichtung (6) einer drehenden elektrischen Maschine (2) nach einem der vorhergehenden Ansprüche, **dadurch gekennzeichnet, dass** die zweiten Kontakte (10) paarweise um die Achse (XX') verteilt sind.

6. Drehende elektrische Maschine (2) des Typs, der über mehrere erste Kontakte (1) versorgt wird, die an einem Lager (13) einer Achse (XX') der Maschine (2) in vorgegebenen Winkelintervallen um die Achse (XX') in einem ersten vorgegebenen Abstand (D1) angeordnet sind, **dadurch gekennzeichnet, dass** sie eine Verbindungsvorrichtung (6) nach einem der vorhergehenden Ansprüche 1 bis 5 umfasst, wobei mehrere erste Anschlüsse (9) der Verbindungsvorrichtung (6) mit den ersten Kontakten (1) verschweißt sind.

7. Drehende elektrische Maschine (2) nach dem vorhergehenden Anspruch, **dadurch gekennzeichnet, dass** sie wenigstens einen Positionssensor umfasst, der an der Verbindungsvorrichtung (6) angeordnet ist.

8. Drehende elektrische Maschine (2) nach dem vorhergehenden Anspruch, **dadurch gekennzeichnet, dass** die Verbindungsvorrichtung (6) wie in einem der Ansprüche 2 bis 4 angegeben beschaffen ist und dass der Positionssensor wenigstens teilweise in einem Aufnahmeraum in der Haube (12) angeordnet ist.

9. Drehende elektrische Maschine (2) nach einem der vorhergehenden Ansprüche 6 bis 8, **dadurch gekennzeichnet, dass** sie eine elektronische Leistungskarte (4) enthält, die mehrere zweite Anschlüsse (22) aufweist, die um die Achse (XX') in dem vorgegebenen zweiten Abstand (D2), der größer als der erste vorgegebene Abschnitt (D1) ist, angeordnet sind und die mit den ersten Kontakten (1) über die Verbindungsvorrichtung (6) elektrisch verbunden sind.

10. Drehende elektrische Maschine (2) nach Anspruch 9, **dadurch gekennzeichnet, dass** sich die zweiten Anschlüsse (22) am Umfang der elektronischen Karte (4) befinden.

11. Aufladevorrichtung (25) für Kraftfahrzeug, die für ein Aufladesystem einer Brennkraftmaschine vorgesehen ist, **dadurch gekennzeichnet, dass** sie durch eine drehende elektrische Maschine (2) nach einem der vorhergehenden Ansprüche 6 bis 10 angetrieben wird.

## Claims

1. Connection device (6) for a rotary electric machine (2) of the type supplied with power by means of a plurality of first pins (1) arranged on a bearing (13) of an axis (XX') of said machine (2) at predetermined angular intervals around said axis (XX') at a first predetermined distance (D1) from the axis (XX'), **characterized in that** said connection device comprises:
- a plurality of second pins (10) that are arranged around said axis (XX') at a second predetermined distance (D2) from the axis (XX'), which is greater than said first predetermined distance (D1), and that are electrically connected to a plurality of first terminals (9) able to be connected to said first pins (1),
- a main part (7) made of plastics material with a plurality of overmoulded metal bars (8) connecting said second pins (10) and said first terminals (9),
the metal bars (8) extending substantially radially from first respective terminals (9).

2. Connection device (6) for a rotary electric machine (2) according to Claim 1, **characterized in that** said connection device also comprises first sealing means (14, 15, 16) able to cooperate with said bearing (13) and second sealing means (17, 18, 19) cooperating with a cover (12).

3. Connection device (6) for a rotary electric machine (2) according to the preceding claim, **characterized in that** the cover (12) is intended to cover in a sealed manner a central zone of the device (6) around the axis (XX'), said zone comprising the first terminals (9).

4. Connection device (6) for a rotary electric machine (2) according to Claim 2 or 3, **characterized in that** said first sealing means (14, 15, 16) comprise a first crown (14) cooperating with a first circumferential groove (15) in said main part (7), and **in that** said second sealing means (17, 18, 19) comprise a second crown (17) cooperating with a second circumferential groove (18) in said main part (7) and a circumferential bearing surface (19) of said cover (12).

5. Connection device (6) for a rotary electric machine (2) according to one of the preceding claims, **characterized in that** said second pins (10) are distributed in twos around said axis (XX').

6. Rotary electric machine (2) of the type supplied with power by means of a plurality of first pins (1) arranged on a bearing (13) of an axis (XX') of said machine (2) at predetermined angular intervals around said axis (XX') at a first predetermined distance (D1), **characterized in that** said rotary electric machine comprises a connection device (6) according to any one of preceding Claims 1 to 5, a plurality of first terminals (9) of said connection device (6) being welded to said first pins (1).

7. Rotary electric machine (2) according to the preceding claim, **characterized in that** said rotary electric machine comprises at least one position sensor arranged on said connection device (6).

8. Rotary electric machine (2) according to the preceding claim, **characterized in that** the connection device (6) is in accordance with one of Claims 2 to 4 and **in that** the position sensor is arranged at least partially in a recess in the cover (12).

9. Rotary electric machine (2) according to any one of preceding Claims 6 to 8, **characterized in that** said rotary electric machine comprises a power circuit board (4) comprising a plurality of second terminals (22) that are arranged around said axis (XX') at a second predetermined distance (D2), which is greater than said first predetermined distance (D1), and that are electrically connected to said first pins (1) by means of said connection device (6).

10. Rotary electric machine (2) according to Claim 9, **characterized in that** the second terminals (22) are situated at the periphery of the circuit board (4).

11. Motor vehicle supercharger (25) intended for a supercharger system of a heat engine, **characterized in that** said supercharger is driven by a rotary electric machine (2) according to any one of preceding Claims 6 to 10.
